# EUROPÄISCHE PATENTANMELDUNG

(11) **EP 3 643 390 A1**
(43) Veröffentlichungstag der Anmeldung: **29.04.2020**
(21) Anmeldenummer: 18202450.5
(22) Anmeldetag: 25.10.2018
(51) Int. Cl.: B01D 46/52, B01D 46/10

(54) **FILTER MIT SEPARATORBLECHEN MIT SPEZIELLER FALTUNG**

(71) Anmelder: Carl Freudenberg KG, 69469 Weinheim (DE)
(72) Erfinder: EWALD, Christian, Dr., 64668 Rimbach (DE); TAPPER, Renate, 64625 Bensheim (DE); BECKER, Jürgen, 67378 Zeiskam (DE)

(57) **Zusammenfassung**

Die Erfindung betrifft einen Filter (10) zur Reinigung von Luft (L) aufweisend einen Rahmen (5), in dem Rahmen (5) angeordnete Lagen eines Filtermediums (3) und Separatorbleche (4), wobei die Lagen des Filtermediums (3) beabstandet zueinander ausgerichtet sind und zwischen je zwei Lagen des Filtermediums (3) je ein Separatorblech (4) angeordnet ist, wobei die Separatorbleche (4) gefaltet sind. Erfindungsgemäß sind die Separatorbleche (4) mit einer speziellen Faltung (1.3) versehen, derart, dass am Separatorblech (4) an einer Seite (A) je eine Anzahl Faltenberge (1.1) und Faltentäler (1.2) und an der anderen Seite (B) eine vielfache Anzahl Faltenberge (1.1) und Faltentäler (1.2) ausgebildet ist.
Dadurch können in vorteilhafter Weise die Strömungsbedingungen der Luft in dem Filter (10) verbessert und insbesondere der Strömungswiderstand gesenkt werden. Gleichzeitig wird eine maximale Staubspeicherfähigkeit des Filters (10) gewährleistet.

Die Erfindung betrifft auch ein Verfahren zur Herstellung eines Separatorblechs (4) für einen solchen Filter (10).

## Beschreibung

Die Erfindung betrifft einen Filter gemäß dem Oberbegriff von Anspruch 1.

### Stand der Technik

Filter in Form von Kassetten sind aus dem Stand der Technik bekannt. So ist in der WO 2017/008827 A1 ein Hochtemperatur-Kassettenfilter als HEPA-Filter gezeigt. Der Filter besitzt eine Mehrzahl von parallel zueinander angeordneten Lagen von Filtermedium, wobei Separatoren verwendet werden, um die Lagen auf Abstand zueinander zu halten. Die Separatoren bestehen aus zickzackförmig strukturiertem Metallblechen bzw. Metallfolien aus Aluminium oder Edelstahl.

Bekannt ist, dass die Metallseparatoren gefaltet (z.B. plissiert), geriffelt oder gewellt sein können.

Allgemein nachteilig an der Verwendung der bekannten Separatoren ist, dass diese den Luftstrom entlang des Filtermediums beeinflussen und den Druckverlust des Filters erhöhen.

Weiter nachteilig an den bekannten Separatoren ist, dass diese rechtwinklig ausgeführt sind, was eine strömungsungüstige Formgebung des Filtermediums ergibt. Auch ergeben sich dadurch Ecken, um welche das Filtermedium geführt werden muss. Wichtig ist, dass das Filtermedium gut an den Separatoren anliegt und durch diese gestützt wird. Handelt es sich um sprödes Filtermaterial, wie z. B. ein Glasfasermedium, so kann dieses leicht mechanisch beschädigt werden.

### Aufgabenstellung

Aufgabe der vorliegenden Erfindung ist es einen Filter zu schaffen, der einen reduzierten Druckverlust bei vergleichbarem Volumenstrom aufweist und die Nachteile aus dem Stand der Technik zumindest reduziert. Weitere Aufgabe ist es, einen für Hochtemperaturanwendungen geeigneten Filter zu schaffen. Weitere Aufgabe ist es, eine besonders gute Abstützung des Filtermediums zu gewährleisten.

### Technische Lösung

Gelöst wird diese Aufgabe durch einen Filter mit den Merkmalen von Anspruch 1.

Die Erfindung betrifft einen Filter zur Reinigung von Luft gemäß dem Oberbegriff von Anspruch 1 und ein Verfahren zur Herstellung eines Separatorblechs für einen solchen Filter nach Anspruch 9.

Der erfindungsgemäße Filter dient der Reinigung von durchströmender Luft und weist ein Gehäuse auf und in dem Gehäuse angeordnete Lagen eines Filtermediums und Separatorbleche, wobei die Lagen des Filtermediums überwiegend in etwa in Durchströmungsrichtung ausgerichtet sind und zwischen je zwei Lagen des Filtermediums je ein Separatorblech angeordnet ist, welches als Abstandshalter zwischen den beiden Lagen des Filtermediums wirkt. Es sind die Separatorbleche des Filters über ihre Fläche geriffelt, gewellt oder gefaltet, z.B. plissiert und bestehen insbesondere aus einer dicken Folie oder einem dünnen Blech. Unter dem Begriff Blech wird hier also auch eine dickere Folie verstanden. Die Höhe der Riffelung, Wellen bzw. Falten bewirkt dann den Abstand zwischen den beiden Lagen des Filtermediums. Unabhängig davon ob eine Riffelung, Wellen oder Falten das Separatorblech strukturieren, so wird dies nachfolgend unter dem Begriff Falten bzw. Faltung zusammengefasst.

Erfindungsgemäß wurde als vorteilhaft erkannt, die Separatorbleche mit einer speziellen Faltung zu versehen. Unter Faltung wird hierbei neben einer klassischen Faltung auch eine Riffelung oder Wellung verstanden. Dadurch können in vorteilhafter Weise die Strömungsbedingungen der Luft in dem Filter verbessert und insbesondere der Strömungswiderstand gesenkt werden. Gleichzeitig wird eine maximale Staubspeicherfähigkeit des Filters gewährleistet. Durch die Verbesserung des Strömungsverhaltens und des reduzierten Druckverlusts im Filter kann die Filterleistung verbessert werden.

Die Faltung in den Separatorblechen ist dadurch gekennzeichnet, dass eine schräge, das heißt nicht parallele Riffelung, Wellung oder Faltung vorliegt. Die Faltung ist dabei derart, dass am Separatorblech auf seiner ersten Seite je eine Anzahl x von Faltenbergen und Faltentälern und auf seiner anderen, zweiten Seite eine vielfache Anzahl y von Faltenbergen und Faltentälern vorliegt. Insbesondere ist n eine natürliche Zahl und es gilt y = n * x mit n = 2, 3, 4 ... Die Faltenberge und Faltentäler erstrecken sich dann von der ersten Seite A zur anderen, zweiten Seite B.

Durch diese Ausgestaltung kann die Stabilität des Separatorblechs verbessert werden. Auch kann das Strömungsverhalten im Filter verbessert und der Filtrationswiderstand des Filters reduziert werden.

Unter einem Faltenberg wird dabei der höchste Punkt der Riffelung, Wellung bzw. Faltung verstanden. Unter einem Faltental hingegen wird der tiefste Punkt einer Riffelung, Wellung bzw. Faltung verstanden.

Da die Faltung über die ganze Breite des Separatorblechs verläuft, ergibt sich - in Durchströmungsrichtung gesehen - ein trapezförmiger Querschnitt eines jeweiligen Separatorblechs. In anderen Worten: in der Seitenansicht des Separatorblechs ergibt sich ein Trapez, insbesondere ein gleichschenkliges, symmetrisches Trapez. Das bedeutet, dass sich die Höhe des Separatorblechs von einer ersten Seite A hin zur anderen, zweiten Seite B des Separatorblechs verkleinert. Bei dieser Eigenschaft geht es also nicht um die Dicke des Blechs, aus welchem das Separatorblech geformt wird, sondern um die Höhe des Separatorblechs, also um den "Höhenunterschied" zwischen Faltental und Faltenberg. Die kontinuierliche Änderung der Höhe des Separatorblechs erlaubt es, dass eine jeweilige Lage eines Filtermediums von der ersten Seite ganz bis an die zweite Seite des Separatorblechs aufliegen und das Filtermedium so gut gestützt werden kann. Das ist insbesondere bei Hochtemperaturfiltern wichtig.

Es wurde als besonders vorteilhaft erkannt, dass ein jeweiliges Separatorblech in der Draufsicht eine rechteckige Form aufweist. Diese kann einfach im rechteckigen Rahmen eines Filters verwendet werden.

Es wurde als besonders vorteilhaft erkannt, dass die Anzahl von Faltenbergen und Faltentälern eines jeweiligen Separatorblechs auf der einen Seite der vierfachen bis zehnfachen Anzahl der Faltenberge und Faltentäler auf der anderen Seite entspricht, das heißt y = 4 bis 10*x. Ein solcher Filter stellt eine besonders vorteilhafte und daher bevorzugte Ausführungsform dar, da sich bei diesem Verhältnis ein besonders geringer Druckverlust über den Filter ergibt und ein optimiertes Strömungsverhalten des Filters vorliegt, wobei gleichzeitig die Stabilität des Separatorblechs gewährleistet bleibt.

Es wurde weiter als besonders vorteilhaft erkannt, dass die Höhe des Separatorblechs auf der ersten Seite (A) im Bereich von h_{A}=4 bis 10 mm, auf der zweiten Seite (B) im Bereich von h_{B}=1 bis 4 mm liegt, inbesondere im Bereich h_{A}=5 bis 7 mm und h_{B}=1 bis 2 mm. Für die letztgenannten Werte wurde ein besonders geringer Strömungswiderstand des Filters gemessen.

In einer besonders vorteilhaften und daher bevorzugten Ausführungsform ist die gestreckte Länge eines jeweiligen Separatorblechs auf der ersten Seite (A) und auf der zweiten Seite (B) gleich groß. Mit gestreckter Länge ist die Länge des Separatorblechs gemeint, wenn die Faltungen beseitigt und eine ebenes Blech erzeugt würde. D.h. das Ausgangsmaterial des Separatorblechs kann ein übliches rechteckiges Blech oder ein Abschnitt von einer Blechbahn mit parallelen Bahnkanten sein. Dies ermöglicht eine besonders kostengünstige Herstellung der Separatorbleche.

In einer vorteilhaften Weiterbildung des erfindungsgemäßen Filters sind die Separatorbleche mit mindestens einer gebördelten Kante versehen, d.h. das Blech ist im Bereich der Kante mindestens ein Mal umgeschlagen. Dies dient zur Versteifung der Kante und zur Stabilisierung des Separatorblechs. Dank der gebördelten Kante kann bei gleichbleibender Stabilität ein Blech geringerer Dicke zur Herstellung der Separatorbleche verwendet werden.

Besonders vorteilhaft ist es, wenn die Separatorbleche aus Aluminium gefertigt sind. Derartige Separatorbleche sind relativ leicht und weisen gleichzeitig eine gute Stabilität und Festigkeit auf.

In einer besonders vorteilhaften und daher bevorzugten Ausführung des Filters ist das Filtermedium plissiert und/oder ein Glasfasermedium, zum Beispiel ein Glasfaserpapier oder ein Mikroglasfaserpapier. Ein solcher Filter weist in vorteilhafter Weise eine große wirksame Filtrationsfläche auf und kann auch bei höheren Temperaturen der zu filternden Luft eingesetzt werden.

Bei dem Filter kann es sich in vorteilhafter Weise um einen Kassettenfilter handeln. Insbesondere um einen HEPA-Filter zur Anwendung in Reinraumanlagen von Lebensmittel- und Pharmaindustrie, der Mikrochipherstellung oder in Kliniken.

Auch könnte der Filter als Hochtemperaturfilter ausgelegt sein für Anwendungen von über 100 Grad Celsius. Dazu kann als Material für die Separatoren Aluminium und als Filtermaterial ein Glasfaserpapier verwendet werden. Ein solcher Hochtemperaturfilter kann zum Beispiel in industriellen Trocknungsanlagen, wie Lacktrocknungsanlagen der Automobilindustrie, zum Einsatz gelangen.

Die Erfindung betrifft auch ein Verfahren zur Herstellung eines Separatorblechs für einen wie obenstehend beschriebenen Filter. Gemäß diesem Verfahren erfolgt die Bearbeitung eines Blechs in einer Bearbeitungsmaschine in einem Durchlauf: Während des Riffelns, Wellens oder Faltens eines Blechs wird die spezielle, obenstehend beschriebene Faltung in das Blech eingebracht. Ein solcher Inlineprozeß erlaubt in vorteilhafter Weise eine besonders kostengünstige Herstellung der Separatorbleche. Als Ausgangsmaterial kann entweder ein Blech in Bogenform (d.h. in Plattenform) oder in Rollenform (d.h. ein aufgerolltes langes Band) verwendet werden. Wird ein Blech in Rollenform verwendet, so muss dieses noch abgelängt und das Separatorblech so auf die richtige Länge beschnitten werden.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: ein Separatorblech für einen Filter gemäß der Erfindung
- Fig. 2a - b: die Anordnung der Separatorbleche mit dem Filtermedium für einen Filter in einer Übersichtsdarstellung
- Fig. 3: unterschiedliche Strukturierungen des Separatorblechs
- Fig. 4: die Faltung des Separatorblechs auf der ersten und auf der zweiten Seite
- Fig. 5: eine vereinfachte Seitenansicht des Separatorblechs
- Fig. 6: einen Filter gemäß der Erfindung

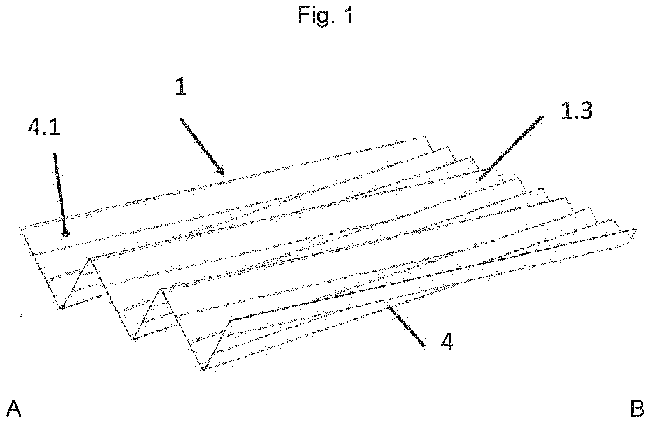

In Figur 1 ist ein Separatorblech 4 für einen erfindungsgemäßen Filter 10 dargestellt. Das Separatorblech 4 ist über seine Fläche mit einer Faltung 1 versehen. Im Vergleich zu bekannten Separatorblechen ist das Separatorblech 4 mit einer speziellen Faltung 1.3 versehen.

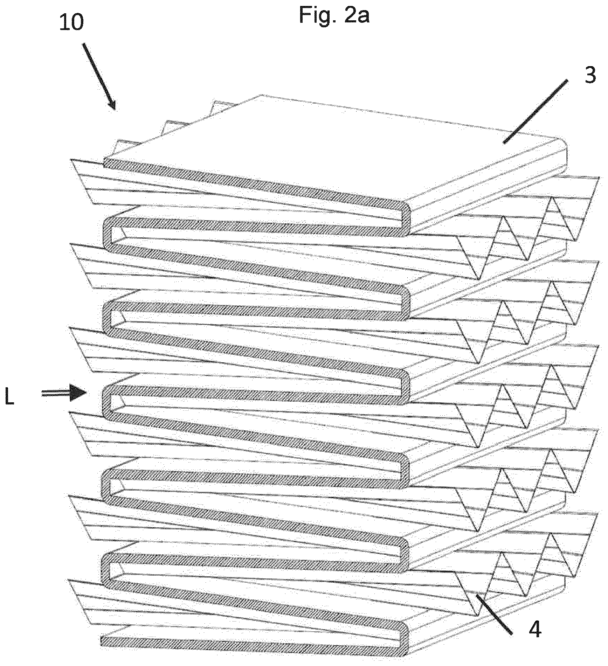

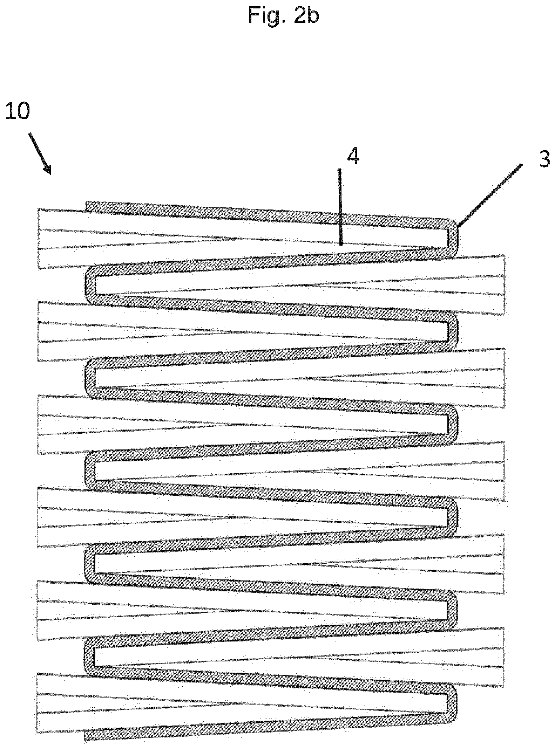

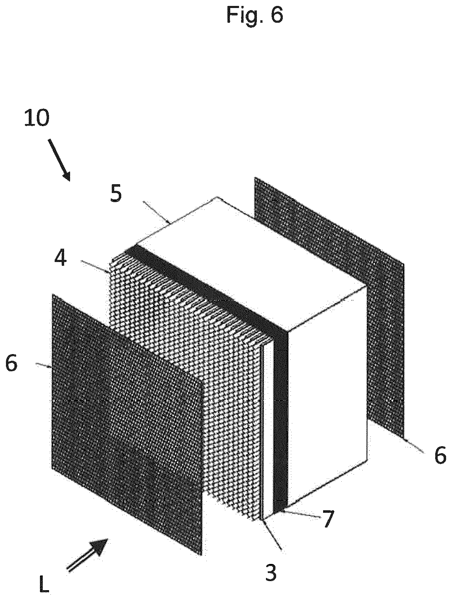

Ein solches Separatorblech 4 kann in einem Filter 10 in einer Anordnung eingesetzt werden, wie sie in Figur 2a und b dargestellt ist. Der Filter 10 besitzt eine Vielzahl von Lagen Filtermedium 3 welche annähernd in Durchströmungsrichtung des Luftstroms L in einem Rahmen 5 (siehe Fig. 6) angeordnet sind. Die Lagen werden durch eine lange Bahn des Filtermediums gebildet. Zwischen je zwei Lagen des Filtermediums 3 ist ein Separatorblech 4 angebracht, welches als Abstandshalter zwischen den beiden Lagen des Filtermediums 3 wirkt, so dass nicht zwei Lagen Filtermedium 3 aneinander anliegen, sondern vielmehr immer ein Luftstrom L durch die Lagen des Filtermediums 3 hindurchgeführt werden kann und der Luftstrom L dabei gefiltert werden kann. Der in Figur 2 und Figur 6 dargestellte Filter 10 wird für seinen Einsatz in eine nicht dargestellte Filteraufnahme montiert. Wie aus Fig. 2b zu erkennen, sind Lagen des Filtermediums 3 um die Separatorbleche 4 gelegt. Die Separatorbleche 4 sind um 180° versetzt zueinander angeordnet.

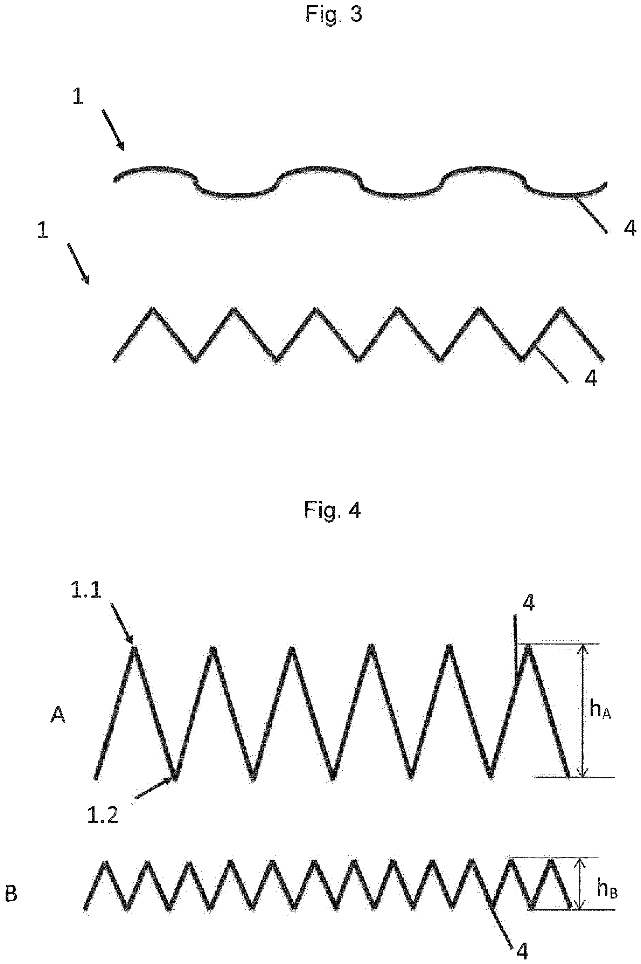

Das Separatorblech 4 - siehe Figur 1 und Figur 4 - besitzt eine Faltung 1, so dass mehrere Faltenberge 1.1 und Faltentäler 1.2 gebildet werden. Alternativ zu einer Faltung 1 könnte das Separatorblech 4 auch mit einer Riffelung bzw. Wellung - wie in Figur 3 dargestellt - versehen sein. Das Separatorblech 4 weist entweder eine Riffelung bzw. Wellung 1 (obere Darstellung) oder eine Faltung 1 (untere Darstellung) auf.

Bei der Faltung 1 handelt es sich nicht um eine bekannte Leporello-Faltung bzw. Zick-Zack-Faltung, welche gemeinhin auch als Plissieren bezeichnet wird, und welche lauter gleichgroße, rechteckige Faltabschnitte aufweist. Vielmehr ist die Faltung 1 als spezielle Faltung 1.3 ausgeführt, so dass sich eine schräge, das heißt nicht parallele Faltung des Separatorblechs 4 ergibt. Die Faltung 1.3 ist dabei derart, dass auf der ersten Seite A eine erste Anzahl von Faltenbergen 1.1 und Faltentälern 1.2 vorliegt, wobei auf der anderen, zweiten Seite B eine vielfache Anzahl von Faltenbergen 1.1 und Faltentälern 1.2 ausgebildet ist. Ausgedrückt werden kann dies durch die Formel y = n * x mit y als der Anzahl auf der zweiten Seite und x als der Anzahl auf der ersten Seite von Faltenbergen und Faltentälern. n ist eine natürliche Zahl mit n = 2, 3, 4 .... In dem in Figur 1 dargestellten Ausführungsbeispiel wurde n = 3 gewählt, das heißt auf der zweiten Seite B findet sich eine dreifache Anzahl von Faltenbergen und Faltentälern 1.1 und 1.2 im Vergleich zur ersten Seite A.

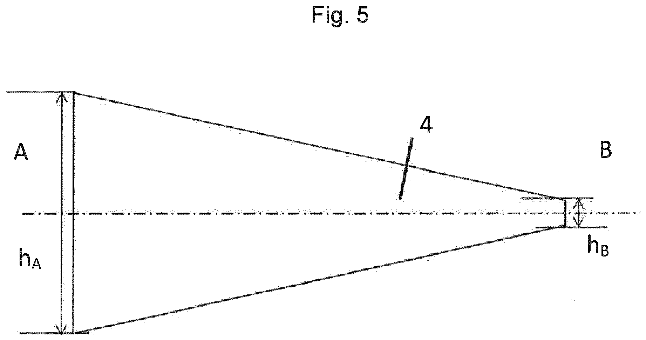

Wie sich die Anzahl der Faltenberge 1.1 und Faltentäler 1.2 auf der ersten Seite A und der zweiten Seite B des Separatorblechs 4 unterscheidet, ist in Figur 4 dargestellt. In der oberen Darstellung von Figur 4 ist die Ansicht der Faltung des Separatorblechs 4 auf der ersten Seite A gezeigt. In der unteren Darstellung von Figur 4 ist die Ansicht der Faltung des Separatorblechs 4 auf der zweiten Seite B gezeigt. Durch die unterschiedliche Anzahl von Faltenbergen 1.1 und Faltentälern 1.2 auf der ersten Seite A und der zweiten Seite B ergibt sich, dass die Höhe h_{A} des Separatorblechs auf der ersten Seite A größer ist als die Höhe h_{B} des Separatorblechs 4 auf der zweiten Seite B. Die Höhe h_{A} bzw. h_{B} meint dabei jeweils den "Höhenunterschied" zwischen einem Faltental 1.2 und einem Faltenberg 1.1. Durch die unterschiedliche Anzahl an Faltenbergen 1.1 und Faltentälern 1.2 sowie die unterschiedliche Höhe h_{A} und h_{B} des Separatorblechs 4 ergibt sich dann, wenn sich die Faltung 1.3 über die ganze Breite des Separatorblechs 4 erstreckt (d.h. von A bis B) ein trapezförmiger Querschnitt des Separatorblechs 4, wie er in Figur 5 dargestellt ist. Durch diese Ausgestaltung des Separatorblechs 4 wird das Strömungsverhalten im Filter 10 verbessert und der Filtrationswiderstand des Filters 10 reduziert.

Insbesondere können benachbarte Separatorbleche 4 um 180 Grad versetzt zueinander angeordnet sein, wie dies in Fig. 2 und Fig. 6 dargestellt ist.

In Figur 6 ist beispielhaft ein erfindungsgemäßer Filter 10 in einer Explosionszeichnung dargestellt.

Der Filter 10 besitzt einen Rahmen 5, in welchem eine Vielzahl von Lagen Filtermedium 3 angeordnet sind und von einem Luftstrom L durchströmt und der Lufstsrom L dabei gereinigt werden kann. Zwischen je zwei Lagen des Filtermediums 3 ist je ein an Hand der anderen Figuren beschriebenes Separatorblech 4 positioniert, welches verhindert, dass zwei Lagen des Filtermediums 3 aneinander anliegen. Um das Filtermedium zu schützen und in dem Filter 10 zu halten sind an den beiden offenen Seiten des Filters 10 Metallgitter vorgesehen. Eine Dichtung 7 ist zwischen dem Rahmen 5 und dem Filtermedium 3 angeordnet und verhindert eine Leckage zwischen dem Filtermedium 3 und dem Rahmen 5.

### Bezugszeichenliste

- 1: Faltung / Riffelung / Wellung
- 1.1: Faltenberg
- 1.2: Faltental
- 1.3: spezielle Faltung -3 Lage Filtermedium
- 4: Separatorblech
- 4.1: Blech
- 5: Rahmen
- 6: Metallgitter
- 7: Dichtung

- 10: Filter

- A: erste Seite
- B: zweite Seite
- L: Luftstrom

- h_{A,B}: Höhe des Separatorblechs

## Patentansprüche

1. Filter (10) zur Reinigung von Luft (L) aufweisend einen Rahmen (5), in dem Rahmen (5) angeordnete Lagen eines Filtermediums (3) und Separatorbleche (4), wobei die Lagen des Filtermediums (3) beabstandet zueinander ausgerichtet sind und zwischen je zwei Lagen des Filtermediums (3) je ein Separatorblech (4) angeordnet ist, wobei die Separatorbleche (4) gefaltet sind, **dadurch gekennzeichnet,**
**dass** die Separatorbleche (4) mit Faltungen (1.3) versehen sind, derart, dass am Separatorblech (4) auf seiner ersten Seite (A) je eine Anzahl (x) Faltenberge (1.1) und Faltentäler (1.2) und auf seiner anderen, zweiten Seite (B) eine vielfache Anzahl (y=n*x) Faltenberge (1.1) und Faltentäler (1.2) ausgebildet ist, wobei die Faltenberge (1.1) und Faltentäler (1.2) von der ersten Seite (A) zur zweiten Seite (B) verlaufen und, dass die Faltung (1.3) - in Durchströmungsrichtung gesehen - einen trapezförmigen Querschnitt eines jeweiligen Separatorblechs (4) bewirkt und sich die Höhe (h_{A}, h_{B}) des Separatorblechs (4) von der ersten Seite (A) hin zur zweiten Seite (B) verkleinert.

2. Filter nach Anspruch 1, **dadurch gekennzeichnet, dass** die Anzahl (y=n*x) Faltenberge (1.1) und Faltentäler (1.2) auf der zweiten Seite (B) der vierfachen bis zehnfachen (n=4...10) Anzahl (x) der Faltenberge (1.1) und Faltentäler (1.2) auf der ersten Seite (A) entspricht (y=4... 10*x).

3. Filter nach Anspruch 1 oder 2, **dadurch gekennzeichnet, dass** das gefaltete Separatorblech (4) in der Seitenansicht die Form eines gleichschenkligen, symmetrischen Trapezes besitzt.

4. Filter nach einem der vorangehenden Ansprüche, **dadurch**
**gekennzeichnet, dass**
die Höhe des Separatorblechs (4) auf der ersten Seite (A) im Bereich von h_{A}=4-10 mm, auf der zweiten Seite (B) im Bereich von h_{B}=1-4 mm liegt, inbesondere im Bereich h_{A}=5-7 mm und h_{B}=1-2 mm.

5. Filter nach einem der vorangehenden Ansprüche, **dadurch**
**gekennzeichnet, dass**
die gestreckte Länge eines jeweiligen Separatorblechs (4) auf der ersten Seite (A) und auf der zweiten Seite (B) gleich groß ist.

6. Filter nach einem der vorangehenden Ansprüche, **dadurch**
**gekennzeichnet, dass**
die Separatorbleche (4) mit mindestens einer gebördelten Kante versehen sind.

7. Filter nach einem der vorangehenden Ansprüche, **dadurch**
**gekennzeichnet, dass**
die Separatorbleche (4) aus Aluminium sind.

8. Filter nach einem der vorangehenden Ansprüche, **dadurch**
**gekennzeichnet, dass**
das Filtermedium (3) ein Glasfasermedium ist.

9. Filter nach einem der vorangehenden Ansprüche, **dadurch**
**gekennzeichnet, dass**
es sich bei dem Filter (10) um einen Kassettenfilter handelt und / oder dass der Filter (10) als Hochtemperaturfilter ausgelegt ist.

10. Verfahren zur Herstellung eines Separatorblechs (4) für einen Filter (10) nach einem der vorangehenden Ansprüche
wobei während dem Riffeln, Wellen oder Plissieren eines Blechs (4.1) die Faltung (1.3) in das Blech (4.1) eingebracht wird.
